# EUROPÄISCHE PATENTSCHRIFT

(11) **EP 2 593 409 B1**
(45) Veröffentlichungstag und Bekanntmachung des Hinweises auf die Patenterteilung: **31.05.2017**
(21) Anmeldenummer: 11738416.4
(22) Anmeldetag: 07.07.2011
(51) Int. Cl.: C03C 10/12, C03B 32/02, C03C 23/00

(54) **LITHIUMHALTIGE, TRANSPARENTE GLASKERAMIK MIT GERINGER WÄRMEDEHNUNG, EINER WEITESTGEHEND AMORPHEN, AN LITHIUM VERARMTEN, ÜBERWIEGEND GLASIGEN OBERFLÄCHENZONE UND HOHER TRANSMISSION, IHRE HERSTELLUNG IN WASSERHALTIGER ATMOSPHÄRE UND VERWENDUNG**
TRANSPARENT GLASS CERAMIC MATERIAL CONTAINING LITHIUM AND HAVING LOW THERMAL EXPANSION, A SUBSTANTIALLY AMORPHOUS LITHIUM-DEPLETED PRIMARILY GLASSY SURFACE ZONE AND HIGH TRANSMISSION, PRODUCTION OF SAME IN AN AQUEOUS ATMOSPHERE AND USE
CÉRAMIQUE DE VERRE TRANSPARENTE CONTENANT DU LITHIUM, À FAIBLE NIVEAU DE DILATATION THERMIQUE ET À HAUT NIVEAU DE TRANSMISSION, PRÉSENTANT UNE ZONE SUPERFICIELLE PRINCIPALEMENT VITREUSE, MAJORITAIREMENT AMORPHE, APPAUVRIE EN LITHIUM, SA PRÉPARATION DANS UNE ATMOSPHÈRE CONTENANT DE L'EAU ET SON UTILISATION

(30) Priorität: 17.07.2010 DE 102010027461
(43) Veröffentlichungstag der Anmeldung: 22.05.2013
(73) Patentinhaber: Schott AG, 55122 Mainz (DE)
(72) Erfinder: GABEL, Falk, 65388 Schlangenbad (DE); BECKER, Otmar, 63225 Langen (DE); GLASENAPP, Michael, 47055 Duisburg (DE); ORTMANN, Jan-Peter, 55270 Klein Winternheim (DE); GREWER, Petra, 40223 Düsseldorf (DE); LUTHER, Veit, 65795 Hattersheim (DE); STRIEGLER, Harald, 55437 Ockenheim (DE); WENNEMANN, Dietmar, 55234 Albig (DE); SCHULER, Thomas, 67596 Dittelsheim-Heßloch (DE); JOHANSSON, Thoralf, 55268 Nieder-Olm (DE); GÖTZ, Helga, 07749 Jena (DE); BUG, Michael, 64367 Mühltal (DE); SIEBENHAAR, Günther, 55294 Bodenheim (DE); HAHN, Gerhard, 55595 Allenfeld (DE); SCHRÖDER, Friedrich-Georg, 55218 Ingelheim (DE)
(86) Internationale Anmeldenummer: PCT/EP2011/061478
(87) Internationale Veröffentlichungsnummer: WO 2012/019833

(56) Entgegenhaltungen:
- DE-A1- 3 345 316
- GB-A- 1 108 473
- GB-A- 1 151 770
- GB-A- 1 247 243
- US-A- 3 756 798
- US-A1- 2005 252 503
- US-A1- 2007 281 849

## Beschreibung

Die Erfindung betrifft eine lithiumhaltige, transparente Glaskeramik mit geringer Wärmedehnung, einer weitestgehend amorphen, an Lithium verarmten, überwiegend glasigen Oberflächenzone, sie betrifft ein Verfahren, mit dem transparente, allseitig glatte Glaskeramiken dieses Typs mit einer überraschend hohen Transmission und Festigkeit hergestellt werden können, und die Verwendung dieser erfindungsgemäßen Glaskeramik.

Transparente Glaskeramiken mit einer schwach ausgeprägten oder nahezu keiner Eigenfarbe haben heute zunehmend an Bedeutung gewonnen. Sie sollten entweder die Eigenschaften einer Beschichtbar-/Dekorierbarkeit oder die einer möglichst hohen Transmission resultierend aus einer geringen Eigenfarbe und einer sehr geringfügig ausgeprägten Streuung mit sich bringen. Gleichzeitig ist für die verschiedenen Applikationen eine hohe Festigkeit gefordert.

Aus dem Stand der Technik ist eine Vielzahl von Verfahren zur Herstellung von festen Glaskeramiken mit einer geringen Wärmeausdehnung bekannt. Solche Glaskeramiken kommen insbesondere in Bereichen, die durch starke Temperaturschwankungen und/oder mechanische Belastung charakterisiert sind, wie beispielsweise in Form von Kochgeschirr, als Glaskeramik-Kochfläche oder im Bereich des Feuerschutzes zum Einsatz.

Glaskeramiken werden im allgemeinen in drei Schritten aus einem Vorläufer- oder Grünglas hergestellt. Das zu einem Artikel geformte Grünglas wird auf eine Keimbildungstemperatur erhitzt, bei der mit Hilfe von Keimbildnern eine Vielzahl von Kristallkeimen in dem Grünglas erzeugt werden. Danach wird die Temperatur auf eine optimale Kristallisationstemperatur erhöht, bei der das Kristallwachstum auf den gebildeten Kristallkeimen stattfindet. Anschließend wird der so hergestellte Artikel auf unterschiedliche Art und Weise auf Raumtemperatur abgekühlt.

Eine verbesserte Festigkeit einer Glaskeramik wird im allgemeinen erreicht, in dem unterschiedliche Spannungszustände in der Oberfläche und dem Inneren der Glaskeramik erzeugt werden. Die Oberfläche der Glaskeramik wird dazu unter Druckspannung gesetzt. Tritt dann eine mechanische Belastung auf, verhindert die unter Druckspannung stehende Oberfläche bis zu einer Material- und/oder Herstellungsverfahrens-abhängigen Grenze das Zerbrechen der Glaskeramik.

Die beschriebene Druckspannung in der Oberfläche kann durch sehr unterschiedliche Verfahren erzeugt werden. Im Folgenden werden einige der vorliegenden Erfindung ähnliche Verfahren des Standes der Technik vorgestellt.

Aus dem Patent US 3,779,856 ist ein Verfahren zur Herstellung von transparenten Glaskeramiken mit hoher Festigkeit und guter thermaler Schock-Resistenz bekannt, bei der ein Keimbildner eingesetzt wird, der unter einer reduzierender Atmosphäre seine Wertigkeit ändert, wobei der Keimbildner mit der veränderten Wertigkeit eine erhöhte Keimbildungseffektivität aufweist. Der Keimbildungsschritt der Keramisierung findet also unter einer reduzierenden Atmosphäre statt, die in direktem Kontakt mit der Oberfläche des Ausgangsglases steht, so dass der Keimbildner an und direkt unterhalb der Oberfläche des Glases reduziert wird und so eine erhöhte Effektivität aufweist. Bei dem anschließenden Kristallisationsschritt ist dann der Kristallisationsgrad an der Oberfläche des Artikels größer als im Inneren. Der unterschiedliche Kristallisationsgrad von Oberfläche und Innerem des Artikels führt zu der gewünschten Druckspannung der Artikel-Oberfläche. Die Reduktion des Keimbildners kann durch die Zugabe von geringen Mengen bestimmter Metalloxide, z.B. Kupfer-, Eisen- oder Manganoxid, katalysiert werden. Erfindungsgemäße Keimbildner sind TiO₂, ZrO₂ oder Mischungen daraus.

Aus dem Patent US 4,391,914 ist ein Verfahren bekannt, das sich zur Erzeugung der Druckspannung der Oberfläche einer Glaskeramik unterschiedliche thermische Ausdehnungskoeffizienten von Kristall-(Lithium-Aluminiumsilikat-Kristallphase) und Restglasphase (Borosilikat oder Boroalumosilikat) zu Nutze macht. Oberhalb von 500 bis 750°C dominiert die Restglas-Phase den thermischen Ausdehnungskoeffizienten der Glaskeramik, da die gebildeten Kristalle in dieser Phase frei in der Matrix der Restglas-Phase "schwimmen". Bei fortschreitender Abkühlung schrumpft die Restglas-Phase wesentlich stärker als die Kristallphase und führt schlussendlich dazu, dass die Kristalle sich berühren, während die Restglas-Phase nur noch interstitial in Taschen vorkommt. Durch fortschreitende Abkühlung kommt es zu kompressiven Spannungen oder einem "Verhaken" an den Korngrenzen der Kristalle.

Das Verfahren, das in der Patentschrift US 3,524,748 beschrieben wird, beruht auf den unterschiedlichen thermischen Ausdehnungskoeffizienten von alpha- und beta-Quarz. Beta-Quarz (Hochquarz) hat einen geringeren thermischen Ausdehnungskoeffizienten als alpha-Quarz (Tiefquarz) und bildet die Hauptkristallphase der druckgespannten Oberflächenschicht, während beta-Quarz die Hauptkristallphase des Inneren des Glaskeramik-Artikels darstellt. Zur Herstellung solcher Glaskeramik-Artikel wird ein Ausgangsglas erschmolzen, geformt, optional einer Keimbildung unterzogen und auf Temperaturen zwischen 1000 und 1250°C erhitzt. Die Verweilzeit bei diesen Temperaturen ist lang genug, um eine einheitliche Kristallisation, deren Hauptphase beta-Quarz darstellt, sicherzustellen. Es werden beispielsweise für die Keimbildung bei 800 bis 950°C eine bis acht Stunden, für die Kristallisationsphase zwei bis acht Stunden angegeben. Anschließend wird die Oberfläche des Artikels innerhalb von 10 bis 60 Sekunden auf Temperaturen unterhalb von 573°C abgeschreckt, um die Rückumwandlung des erzeugten Hochquarzes in Tiefquarz (alpha-Quarz) oberflächennah zu verhindern. Das Innere des Glaskeramik-Artikels wird langsamer abgekühlt, so dass dort eine Umwandlung in Tiefquarz stattfindet. Auf Grund des höheren thermischen Ausdehnungskoeffizienten von Tiefquarz zieht sich das Innere des Glaskeramik-Artikels beim Abkühlen stärker zusammen als die Hochquarz-Oberflächenschicht und erzeugt so in der Oberflächenschicht eine Druckspannung. Zur Herstellung solcher Glaskeramik-Artikel eignen sich Glaszusammensetzungen, die als Hauptkomponenten SiO₂, Al₂O₃, MgO₂ und ZrO₂ enthalten. Bis zu 15 Gew.-% ZnO können enthalten sein, ebenso wie geringe Mengen Li₂O, Nb₂O₃, Ta₂O₂, CaO, BaO, TiO₂ und B₂ O₃, wobei die letzteren in Summe nicht mehr als 4 Gew.-% ausmachen sollten.

Die Patentschrift US 4,940,674 lehrt die Herstellung transparenter, im Wesentlichen trübungsfreier Glaskeramik-Artikel mit geringem thermischen Ausdehnungskoeffizienten, deren Ausgangsgläser als Hauptkomponenten Li₂O, Al₂O₃, SiO₂ und B₂O₃ umfassen, und denen TiO₂ und/oder ZrO₂ als Keimbildner und sehr geringen Mengen an Cr₂O₃ als speziellen Keimbildner für die trübungsfreie Herstellung von transparenten Glaskeramiken zugegeben werden können. Zusätzlich sind geringe Mengen glasmodifizierender Oxide der Gruppe K₂O, SrO und/oder BaO enthalten.

Aus der Patentschrift DE 101 10 225 C2 ist ein "glaskeramisches Trägermaterial für die Beschichtung mit einer Spiegelschicht bekannt, enthaltend Glaskeramik und eine mindestens Na₂O und/oder K₂O enthaltende glasige Oberflächenschicht mit einer Oberflächenrauhigkeit ohne Polieren von Rₐ <50 nm. Dort wird durch die Zusammensetzung erreicht, dass sich eine mit den Komponenten Na₂O/K₂O angereicherte glasige Oberflächenschicht ausbildet, die bis zu 1,5 µm Dicke besitzt. Durch die glasige Oberflächenschicht wird erreicht, dass die Zunahme der Oberflächenrauhigkeit in der Glaskeramik gegenüber dem Ausgangsglas weniger als 10 nm beträgt.

Danach soll sich also eine glasige Oberflächenschicht mit möglichst geringer Rauhigkeit ohne Polieren ausbilden, um auf dieser glatten Schicht als Trägeroberfläche optimal spiegelnde Beschichtungen, insbesondere für Reflektoren herzustellen.

GB1151770 A lehrt Lithium-Aluminium-Silikat Glaskeramiken mit einer etwa 5-10 µm dicken amorphen Oberflächenschicht, welche an Lithium verarmt ist. Beispiel 3 in GB1151770 A setzt sich in Gew.% zusammen aus 54,1 SiO2, 28,2 Al2O3, 4,3 Li2O, 0,8 MgO, 3,5 ZnO, 4,1 P2O5, 3,6 ZrO2, 1,2 TiO2 und 0,2 Na2O. Der Al2O3-Gehalt kann in GB1151770 A zwischen 10 und 35 Gew.% schwanken.

In US2005252503 A1 werden 0.5-2.5 µm dicke amorphe Oberflächenschichten speziell für Glaskeramiken gelehrt, welche im sichtbaren Bereich eine Lichttransmission unter 15% aufweisen, gemessen bei 4 mm Probendicke.

Die aus dem Stand der Technik bekannten Herstellungsverfahren sind aufwändig und kompliziert, benötigen spezielle Keimbildner und z. T. umweltrelevante Zusammensetzung-Komponenten.

Die Aufgabe der vorliegenden Erfindung besteht daher darin,
1. Glaskeramikprodukte zur Verfügung zu stellen, die eine Li-arme Zone auf allen Seiten aufweisen,
2. ein Verfahren zu finden, das die Herstellung einer Glaskeramik-Scheibe erlaubt, die auch auf ihrer während der Keramisierung mit der Trägerplatte in Verbindung stehenden Rückseite eine an Li verarmte Oberflächenschicht besitzt, die in etwa der Schichtdichte der an Li verarmten Schicht auf der Vorderseite der Scheibe (oder im Randbereich) entspricht (300 bis 700 nm), mindestens aber 50nm und <5000 nm dick ist, mit Hochquarz-Mischkristallen (HQMK) als dominanter Kristallphase im Inneren, wobei das Verfahren bei erhöhter Qualität schneller durchzuführen ist und die erzeugten Artikel dennoch hohe Transmissionswerte im sichtbaren Bereich aufweisen. Unter hohen Transmissionswerten werden erfindungsgemäß Transmissionen verstanden, die im sichtbaren Wellenlängenbereich besser als 0,75 bei 400 nm, > 0,845 bei 450 nm, >0,893 bei 550 nm, > 0,90 bei 600 nm, > 0,90 bei 700 nm Wellenlänge sind, bezogen auf eine Wandstärke von 4 mm.

Diese Aufgabe wird durch eine lithiumhaltige, transparente allseitig glatte Glaskeramik mit geringer Wärmedehnung nach Anspruch 1 gelöst. Vorteilhafte Ausgestaltungen und Weiterbildungen der Erfindung sind in den abhängigen Ansprüchen 2-7 angegeben.

Die Dicke der glasigen Oberflächenzone liegt dabei im Bereich von 50 bis 3000 nm und bevorzugt von 300 bis 1500 nm.

Die glasige Oberflächenzone ist nach der Erfindung mit dem überwiegend kristallinen Innenbereich durch einen Übergangsbereich verbunden.

Ein Übergangsbereich vermittelt zwischen dem glasigen Randbereich und dem kristallinen Inneren des Glaskeramik-Artikels, wobei die Anzahl bzw. der Anteil der Kristalle gegenüber der glasigen Matrix in Richtung auf das kristalline Innere zunimmt. Der Übergangsbereich zwischen dem glasigen Randbereich und dem kristallinen Inneren des Artikels ist dabei vorteilhafter Weise möglichst klein; er kann aufgrund des erfindungsgemäßen Verfahrens kleiner 200 nm in der Dicke gehalten werden. Bevorzugt ist jedoch ein Übergangsbereich, der maximal 100 nm dick ist. Ein möglichst kleiner Übergangsbereich zwischen glasigem Randbereich und kristallinem Inneren erhöht die Transmission des fertigen Artikels.

Dabei gilt, je schärfer der Übergang zwischen den beiden Schichten, desto höher die Transmission.

In einer bevorzugten Ausführungsform der Erfindung weist die Glaskeramik eine Hauptkristall-Phase auf, die mehr als 50 Gew.-% Hochquarz-Mischkristalle (HQMK) enthält, wobei die Hochquarz-Mischkristalle des kristallinen Innenbereichs eine Gitterkonstante a im Bereich von 5,18 Å bis 5,19 Å aufweisen. Glaskeramiken, die überwiegend Hochquarz-Mischkristalle enthalten, zeichnen sich - aufgrund besonders geringer Brechwertunterschiede zwischen Kristallen und Restglasphase - durch besonders hohe Transparenz aus.

Unter amorpher (glasiger) Oberflächenzone einer LAS-Glaskeramik wird erfindungsgemäß eine Zone oder Schicht direkt an der Glaskeramik-Oberfläche verstanden, die im Gegensatz zum Inneren, d.h. dem Gefüge unterhalb dieser Randschicht, nicht die typischerweise im Mittel 20nm bis 100nm großen HQMK (oder andere) Kristalle aufweist, sondern überwiegend amorph ist. Die im wesentlichen amorphe Oberflächenzone umfasst dabei für HQMK oder KMK (Keatit-Mischkristalle) als Hauptkristallphase maximal 10 Volumen-% Kristalle, d.h. mindestens 90 Volumen-% der Oberflächenzone bestehen aus einer glasigen Matrix (nachweisbar über streifende Röntgenbeugung). Besonders bevorzugt umfasst der amorphe Oberflächenbereich weniger als 1 Volumen-% Kristalle. Im Gegensatz dazu haben Kristalle an dem im wesentlichen kristallinen Inneren des Glaskeramik-Artikels einen Anteil von mindestens 70 Volumen-%, bevorzugt von mindestens 80 Volumen.-%, besonders bevorzugt mindestens 90 Volumen.-%.

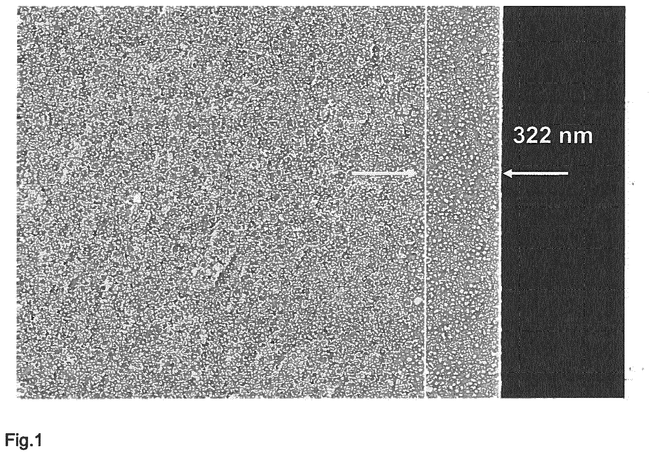

Nachweisbar ist diese Schicht entweder über "Streifende Röntgenbeugung" oder auch über eine Querschnitts-Präparation und Elektronenbeugung im Transmissions-Elektronen-Mikroskop (TEM) oder indirekt im Raster-Elektronen-Mikroskop (SEM). Für die SEM-Untersuchung wird der Querschnitt vorher mit verdünnter Flusssäure chemisch angeätzt. Die Flusssäure greift die Glasphase der LAS-Glaskeramik deutlich stärker an als die HQMK/KMK-Kristalle. Auf diese Weise wird der Kontrast der Kristalle verstärkt und im SEM sind die Korngrenzen der Kristalle erkennbar, so dass der Fachmann aufgrund der mit Röntgenbeugung und SEM/TEM sichtbar gemachten Strukturunterschiede zwischen kristallinem Inneren und glasigem Oberflächenbereich unterscheiden kann (Fig. 1).

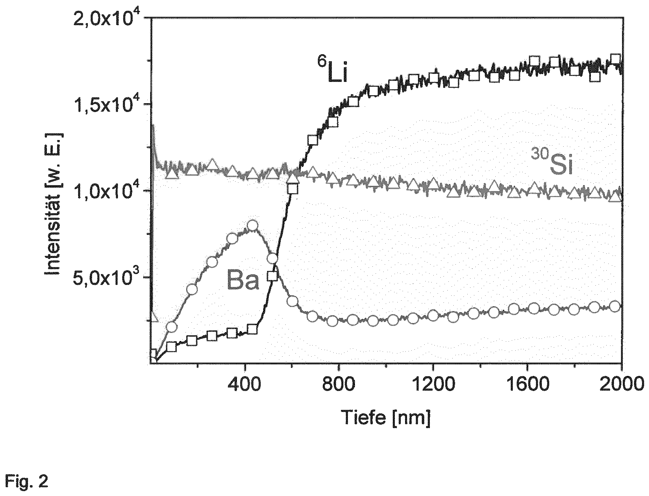

Unter Li-verarmter Oberflächen-Zone einer LAS-Glaskeramik wird eine Schicht an der Oberfläche verstanden, in der der Gehalt an Lithium nur noch 5% bis 20% des Wertes für den Lithiumgehalt der Glaskeramik im kristallinen Inneren beträgt. Der Li-Gehalt in einer LAS-Glaskeramik wird üblicherweise durch Tiefenprofil-Messungen mit Hilfe der Sekundärionen-Massenspektroskopie erfasst (SIMS oder Time of Flight SIMS: TOF SIMS, Fig. 2).

Der erfindungsgemäße Glaskeramik-Artikel hat typischerweise eine hohe Transmission und Transparenz insbesondere für Wellenlängen des sichtbaren Spektrums, wobei die Transmissionen in Anspruch 1 angegeben ist.

Die vorliegende Erfindung umfasst auch ein Verfahren zur Herstellung von hoch-transparenten, hochfesten Glaskeramik-Artikeln. Das für die Herstellung der erfindungsgemäßen Glaskeramiken eingesetzte Verfahren zeichnet sich speziell durch seine kurzen Verweilzeiten in der Keimbildungs- und Kristallisationsphase aus, sowie dadurch, dass die Herstellung auch ohne Formiergas möglich ist. Insgesamt ist das Verfahren effizienter als vergleichbare Verfahren aus dem Stand der Technik.

Das erfindungsgemäße Verfahren ist in Anspruch 8 definiert.

Die mit dem erfindungsgemäßen Verfahren hergestellten Glaskeramik-Artikel haben eine sehr hohe Transparenz, so dass sie beispielsweise auch im Schichtverbund noch den Anforderungen an Fahrzeugsichtscheiben gerecht werden. Darüber hinaus können sie auch hochfest sein und somit als Glaskeramik für Schutzanwendungen verwendet werden.

Ein besonderer Vorteil des erfindungsgemäßen Verfahrens ist die homogene Kristallisation, worunter eine gleichmäßige Verteilung der Kristalle oder Kristallite in der Restglas-Phase und sehr ähnlich Korngrößen verstanden werden. Eine solche Verteilung vermindert zum einen die Lichtstreuung und die Brechzahlunterschiede zwischen den einzelnen Phasen der Glaskeramik und erhöht zum anderen die Transparenz des erzeugten Glaskeramik-Artikels.

Daher weisen die Kristalle Korngrößen auf, deren Standardabweichung kleiner als +/- 5%, bevorzugt kleiner als +/- 3% und insbesondere bevorzugt kleiner +/- 2% ist.

LAS-Gläser nach der Erfindung sind Glaskeramiken mit einen Zusammensetzungsbereich (in Massen-%) von
50 - 75,0 SiO₂,
15 - 28,0 Al₂O₃,
0 - 2,0 B₂O₃,
0 - 1,0 F,
2,0 - 6,0 Li₂O,
0 - 6,5 CaO + SrO + BaO,
0 - 7,0 TiO₂,
0 - 5,0 ZrO₂,
0 - 4,0 ZnO,
0 - 3,0 Sb₂O₃,
0 - 3,0 MgO,
0 - 3,0 SnO₂,
2,0 - 7,0 TiO₂ + ZrO₂ + SnO₂,
0 - 8,0 P₂O₅,
0 - 1,5 As₂O₃,
0 - 1,0 Nd₂O₃,
0 - 4,0 Na₂O + K₂O, wobei die jeweiligen Anteile innerhalb der nachfolgend angegebenen Bereiche liegen,
0 - 4,0 Na₂O,
0 - 4,0K₂O,
umfasst, sowie übliche Läutermittel wie Sb₂O₃, As₂O₃, SnO₂, Ce₂O₃, Fluor, Brom und Sulfat bei einem Wassergehalt von 0,01 - 0,08 Massen-%.

Anschließend wird der kristallisierte Körper mit einer Kühlrate, die zumindest zeitweise mindestens 5K/Minute beträgt, bevorzugt 10 bis 20K/Minute, auf zumindest 600°C abgekühlt. Zu hohe Abkühlraten, wie sie etwa zum Abschrecken eingesetzt werden, erweisen sich aber als nachteilig in Bezug auf die Transmission und Streuung. Die Abkühlrate sollte daher 100K pro Minute nicht übersteigen. Es hat sich gezeigt, dass Glaskeramik-Artikel, die mit Kühlraten von 10 bis 20K/min gekühlt wurden, besonders gute Eigenschaften hinsichtlich Transmission und Transparenz aufweisen.

Im Vergleich zu üblichen Keramisierungsverfahren sind vorteilhafter Weise die Verweilzeiten sowohl in der Keimbildungs- als auch in der Kristallisations-Phase kurz, was zu deutlichen Einsparungen in der benötigten Energie führt und den Durchsatz erhöht.

Große Temperaturunterschiede zwischen Unter- und Oberseite des zu keramisierenden Artikels können Inhomogenitäten im erzeugten Glaskeramik-Artikel zur Folge haben. Unter Inhomogenitäten werden in diesem Zusammenhang beispielsweise deutlich unterschiedliche Kristallitgrößen, die ungleichmäßige Verteilung der Kristallite innerhalb des Artikels oder auch die Ausbildung von chemisch unterschiedlich zusammengesetzten Kristallphasen, sowie unterschiedliche Brechungsindizes der Phasen der Glaskeramik verstanden. Diese Inhomogenitäten können sich wiederum negativ auf die Qualität, insbesondere auf die angestrebte hohe Transparenz des erfindungsgemäßen Glaskeramik-Artikels auswirken.

Der Temperaturunterschied zwischen Ober- und Unterseite des zu keramisierenden Grünglas während der Keimbildung und der Keramisierung sollte daher bei 10K, bevorzugt < 3K und besonders bevorzugt < 1 K gehalten werden.

Die schnelle Abkühlung nach der Kristallisationsphase führt vorteilhafter Weise zur Ausbildung einer im Wesentlichen glasigen Randschicht, die ein im Wesentlichen kristallines Inneres vollständig oder zumindest teilweise umschließt. Die Dicke der glasigen Schicht liegt dabei im Bereich von 50 bis 3000 Nanometern, vorzugsweise im Bereich von 300 bis 1500 Nanometern. Der im Wesentlichen glasige Randbereich oder die im Wesentlichen glasige Randschicht, nachfolgend auch nur "glasiger Randbereich" genannt, umfasst dabei maximal 10 Gew.-% Kristalle, d.h. mindestens 90 Gew.-% des Randbereichs bestehen aus einer glasigen Matrix. Besonders bevorzugt umfasst der glasige Randbereich weniger als 1 Gew.-% Kristalle. Im Gegensatz dazu haben Kristalle an dem im Wesentlichen kristallinen Inneren des Glaskeramik-Artikels, nachfolgend auch nur "kristalline Inneres" oder "kristalliner Innenbereich" genannt, einen Anteil von mindestens 50 Gew.-%, bevorzugt von mindestens 80 Gew.-%, besonders bevorzugt mindestens 90 Gew.-%.

Maßgeblich durch die, in Weiterbildung der Erfindung vorgesehene, geringe Feuchtigkeit im Ofen bei der Keramisierung beeinflusst, kann insbesondere ein glasiger Randbereich ausgebildet werden, welcher einen geringeren Brechungsindex als das kristalline Innere aufweist. Auf diese Weise kann der glasige Randbereich auch anti-reflektiv wirken, so dass auf das zusätzliche Aufbringen einer Anti-Reflexschicht, beispielsweise bei Fahrzeugsichtscheiben, verzichtet werden kann, wodurch eine deutliche Reduzierung der Kosten durch Material- und Zeitersparnis möglich wird. Die Ausbildung des glasigen Randbereichs kann dabei besonders vorteilhaft die Transparenz des fertigen Artikels um ca. 1% absolut im sichtbaren Wellenlängenbereich erhöhen.

Insbesondere ermöglicht die schnelle Abkühlung in Kombination mit der nachfolgend beschriebenen "trockenen Ofenluft" eine Transparenz-Verbesserung um bis zu 1% absolut im Wellenlängenbereich oberhalb von 400 nm verglichen mit einer üblichen langsameren Abkühlungsrate von 3K/Minute.

Bei einer Glaskeramik nach der vorliegenden Erfindung besteht ein Brechungsindex-Unterschied zwischen der Glasphase und den Kristallen in einem Bereich zwischen 0,001 und 0,05 wobei die glasige Oberflächenzone einen geringeren Brechungsindex als der überwiegend kristalline Innenbereich der Glaskeramik aufweist und durch die Keramisierung und anschließende Abkühlung der Unterschied der Brechungsindices zwischen der Restglas-Phase der Oberflächenzone und der Kristallphase des Innenbereichs kleiner als +/- 0.3, bevorzugt 0.1 ist.

Vorteilhafter Weise kommt eine Weiterbildung des erfindungsgemäßen Verfahrens mit zwei Keimbildnern, vorzugsweise TiO₂ und ZrO₂, aus. Aber es können auch Keimbildner wie beispielsweise nur TiO₂, nur ZrO₂, SnO₂ und Oxide des Chroms, das häufig zur Verringerung der Trübung eingesetzt wird, Verwendung finden.

Die Erfindung beruht auf der Annahme, dass die Restglasphase eine wichtige Rolle bei der Trübung von transparenten Glaskeramiken spielt, ausgelöst entweder durch den Unterschied im Brechungsindex zwischen Restglas- und Kristallphase und/oder durch den Einfluss der Restglasphase auf die entstehende Kristallgröße. Es wurde angenommen, dass die Trübung durch größere Kristalle verursacht wird, weil größere Kristalle zu einer erhöhten Lichtstreuung führten. Das Ziel der Erfindung war deshalb möglichst viele, möglichst kleine Kristalle zu erzeugen, wofür die Zugabe von Cr₂O₃ als Katalysator für die Keimbildung nicht notwendig war.

In einer vorteilhaften Weiterbildung enthält die erfindungsgemäße transparente Glaskeramik 0,013 bis 0,23 Gew.-% Fe₂O₃, bevorzugt 0,013 bis 0,014 Gew.-% und besonders bevorzugt 0,013 bis 0,04 Gew.-% Fe₂O₃ . Schon geringe
Fe₂O₃-Gehalte sind im Allgemeinen in transparenten Gläsern oder Glaskeramiken unerwünscht, da sie zur Brauntönung des produzierten Artikels führen können. Aus diesem Grund werden häufig eisen-arme und daher auch vergleichsweise teure Rohstoffe zur Herstellung dieser Produkte verwendet. Im Gegensatz dazu ist ein gewisser Fe-Gehalt in dieser erfindungsgemäßen Ausführungsform, die beispielsweise als Sichtscheibe in der Fahrzeugindustrie Verwendung finden kann, auf Grund der ansonsten hohen Transmission tolerierbar.

Gemäß einer Weiterbildung ist ein gewisser Fe-Gehalt sogar ausdrücklich erwünscht, da die erzeugte Brauntönung vorteilhafter Weise den Durchtritt von UV-Licht (Wellenlängen kleiner 400 nm) behindert und so die schädigende Wirkung des UV-Lichts abgeschwächt oder auch verhindert wird.

Die erfindungsgemäße spezielle Kombination von Temperaturprogramm, Verweilzeit und Ofenfeuchte-Gehalt verbessert insbesondere die Eigenschaften der Transparenz, so dass im Vergleich mit herkömmlichen Keramisierungs-Verfahren eine erhebliche Erniedrigung der Streuung erreicht werden kann. Besonders offensichtlich wird die Verbesserungswirkung, wenn der erfindungsgemäße Artikel im Schichtverbund verwendet wird, beispielsweise als insbesondere hochfeste Fahrzeugsichtscheibe, weil sich hier der Transparenz-Zuwachs mit der Anzahl der für den Schichtverbund verwendeten Einzelscheiben jeweils addiert.

Besonders vorteilhaft in Bezug auf eine geringe Streuung des fertigen Glaskeramik-Artikels weisen die Hochquarz-Mischkristalle im kristallinen Innenbereich eine Gitterkonstante a im Bereich zwischen 5,18 und 5,19 Å auf.

Der erfindungsgemäße Glaskeramik-Artikel unterscheidet sich von herkömmlichen Glaskeramik-Artikeln im Wesentlichen durch die o.g. hohe Transparenz im sichtbaren Spektrum.

Nach der Erfindung wird die Keramisierung bei einem Ofenluft-Feuchtegehalt von maximal 10 Vol.-% Feuchte, bevorzugt bei maximal 5 Vol.-% Feuchte und insbesondere bevorzugt bei maximal 2,5 Vol.-% Feuchte durchgeführt.

Dabei entsteht eine LAS Glaskeramik mit einer wenigstens auf allen Seiten 50 nm dicken, an Lithium-Ionen verarmten, amorphen Zone auf ihrer Oberfläche, wobei der für das Zustandekommen der Lithium armen, amorphen Zone erforderliche Ionenaustausch während der Keramisierung durch Wasser- oder Wasserstoffentfernung oder Wasser- oder Wasserstoffzufuhr, unter Ausnutzung der Partialdruck-Differenz zwischen der sich ausbildenden Glaskeramik und ihrer Umgebung erfolgt.

Der für das Zustandekommen einer Li armen, amorphen Oberflächenzone erforderliche Ionenaustausch läuft während des Keramisierungsprozesses ab und die Dicke der Zone wird durch den Wasser- oder Wasserstoffgehalt der Ofenatmosphäre während dieses Prozesses eingestellt.

Der Wassergehalt der Ofenatmosphäre wird in Wechselwirkung mit dem OH-Gehalt der Glaskeramik während des Prozesses je nach Wassergehalt des LAS-Ausgangsglases und der gewünschten Dicke der Li-armen, amorphen Oberflächenschicht auf >= 0,05Vol% und <= 25Vol% eingestellt.

Der Wasserstoffgehalt der Ofenatmosphäre wird während des Prozesses je nach Wasserstoffgehalt des LAS Ausgangsglases und gewünschter Dicke der Li-armen, amorphen Oberflächenschicht auf >= 0,05 Vol% und <= 10 Vol% eingestellt.

Es konnte nun weiter gefunden werden, daß die Aufgaben auf einfache Weise gelöst werden, wenn der Ionenaustausch vor der Keramisierung zur Glaskeramik durch Einstellung des Wassergehaltes c_{H2O} im Ausgangsglas vorbereitet und während der Keramisierung erfolgt ist. Unterstützt werden kann dieser Prozeß dabei nach der Erfindung sehr wirkungsvoll durch Wasserentzug oder Wasserzufuhr während des Keramisierungsprozesses. Der Ionenaustausch erfolgt an der Oberfläche der Glaskeramik dabei bevorzugt in einer Schichtdicke von bis zu 600 nm.

Überraschenderweise hat es sich gezeigt, dass der Mechanismus, der zur Ausbildung der glasigen, Li-verarmten Oberflächenschicht führt, im wesentlichen auf den Einfluss von Wasser und/oder Wasserstoff im Glasinneren auf die Kristallisationstemperatur der Kristalle zurückzuführen ist.

Die Glaskeramik nach der vorliegenden Erfindung weist dabei im Grade ihrer Verarmung an Li-Ionen an ihrer Oberfläche eine zunehmend glasige Schutzschicht auf. Das Zustandekommen der glasigen Schutzschicht kann mit Hilfe von Verdampfungsprozessen während der Keramisierung und dem Einfluss von Wasser und/oder Wasserstoff auf die Kristallisationstemperatur beschrieben werden, d. h. je mehr OH-Gruppen oder je mehr Wasserstoff im Ausgangsglas der Glaskeramik eingebaut sind, um so stärker wird bei gleichem Keramisierungsprogramm die Kristallisationstemperatur erniedrigt.

Die Ausgangsgläser zur jeweiligen Glaskeramik enthalten nach der Erfindung gezielt Wasser und/oder Wasserstoff, das/der während des Temperaturprozesses in Oberflächennähe in die Ofenatmosphäre abgegeben werden kann. Je nach dem, wie der Wasserentzug gesteuert wird und der Wassergehalt des Ausgangsglases eingestellt ist, kann die Oberflächenzone unterschiedlich stark und tief an OH-Gruppen relativ zum Inneren verarmen, oder aber bei extremer Feuchte der Umgebung sich auch mit Wasser anreichern.

Ist eine Oberflächenzone relativ zum Inneren an OH-Gruppen verarmt, so wird dort die Kristallisation zu höheren Temperaturen als im Inneren verschoben und die Kristallisation beginnt im Inneren. Mit beginnender Bulk-Kristallisation wandert Li aus der "entwässerten" Oberflächen-Schicht ins Innere ab und Elemente, die nicht in die HQMK eingebaut werden, wie Na, K, Ca, Ba, diffundieren im Gegenzug in die Li-verarmte Oberflächen-Schicht.

Die durch diese Diffusionsprozesse veränderte Oberflächen-Schicht führt in dem oben erwähnten Temperaturbereich bis etwa 900 °C nicht zur HQMK-Bildung; es bleibt eine glasige Oberflächen-Schicht.

Je höher der OH-Gehalt und/oder der Wasserstoff-Gehalt des Ausgangsglases, um so dicker kann die glasige, Li-verarmte Oberflächen-Schicht ausgebildet werden. Allerdings hängt die Verarmungstiefe auch noch von der Glaskeramik-Zusammensetzung und der Temperaturführung während der Keramisierung ab.

Wenn der Wasserentzug behindert oder unterbunden wird, kann es umgekehrt zu einem Beginn der Kristallisation an der Oberfläche kommen, bzw. zu einem völligen Ausbleiben der glasigen Oberflächen-Schicht, was dann eine sehr starke Rissbildungsneigung unter Einwirkung korrosiver Substanzen im späteren Einsatz zur Folge hat.

Nach der Erfindung wird zur Steuerung der oben beschriebenen Parameter bevorzugt ein elektrisch beheizter Ofen, vorzugsweise in Form eines Durchlaufofens, insbesondere eines Rollenofens für die Keramisierung verwendet.

Bei der Keramisierung wird eine Trägerplatte verwendet, die an ihrer mit der Glaskeramik in Kontakt stehenden Seite (Kontaktseite) mit Zu- bzw. Ableitungen für Umgebungsgase (z.B. Ofenatmosphäre) versehen ist.

Die Glasscheiben werden während des Keramisierungsprozesses auf einer als Brennhilfsmittel dienenden, glatten Unterlage (Trägerplatte) gelagert. Dies kann sowohl in einem Chargierofen stattfinden, als auch während eines Transportes durch einen Rollenofen. In beiden Ofentypen kann eine Keramisierung stattfinden, d.h. ein Aufheizen in 1 bis 5h auf 750 bis 980°C realisiert werden, so dass eine ebene Platte mit Hoch-Quarz-Mischkristallen (HQMK) als Hauptkristallphase und gewünschtem Kristallinitätsgrad (50% bis 90%) und gewünschter Kristallitgröße (20nm bis 100nm) entsteht.

Eine Trägerplatte aus Keatit wird z. B. in der US 7,056,848 B2 sowie der entsprechenden DE 102 26 815 B4 beschrieben. Die auf dieser Trägerplatte aufliegende Seite der Glaskeramik-Scheibe ist die Rückseite. Die Oberfläche der Glaskeramik-Rückseite kann durch den Kontakt mit der Unterlage kleine Kratzer, Riefen oder auch anhaftende Partikel aufweisen und wird daher im Endprodukt bevorzugt als Rückseite, die dem Anwender abgewandt ist, verwendet.

Diese Rückseite oder Unterseite der Scheibe ist die Seite, auf der z.B. bei der Verwendung als transparente Kochfläche die farbgebende, unterseitige Beschichtung vorgenommen wird und die bei einem Einbau als Kochfeld die vom Betrachter abgewandte Seite darstellt, während die (meist während des Keramisierungsprozesses zusätzlich dekorierte) Oberseite der Glaskeramikscheibe dem Betrachter zugewandt ist. Bei der Verwendung z.B. als Kaminsichtscheibe kann die Rückseite der betreffenden LAS-Glaskeramikscheibe beim Einsatz aggressiven Abgasen ausgesetzt sein. Bei der Verwendung z.B. als Brandschutz-Laminatscheiben-System, werden die Rückseiten der betreffenden LAS-Glaskeramikscheiben dem Laminierprozess unterzogen. Beim Einsatz als Trägerplatte für die Solarindustrie kann die betreffende Seite z.B. Ionenaustausch-Prozessen unterworfen sein oder in einem elektrischen Feld in Kontakt mit anderen Gläsern kommen.

Die Trägerplatten können aus einem keramischen oder auch einem glaskeramische Material bestehen. Bei letzteren handelt es sich üblicherweise um sogenannte Unterlagsplatten aus Glaskeramiken, die vorwiegend Keatit-Mischkristalle (KMK) enthalten.

Während der Keramisierung in einem Elektro- oder Gasofen mit definiertem OH-Gehalt und/oder Wasserstoff-Gehalt der Ofenatmosphäre bildet sich je nach OH- oder H-Gehalt des LAS-Ausgangsglases auf der Oberseite der betreffenden LAS-Glaskeramikscheibe üblicherweise eine 200 nm bis 2000 nm dicke, an Lithium verarmte, meistens überwiegend amorphe (glasige) Oberflächenzone aus, wenn als Hauptkristallphase in dem resultierenden Glaskeramikgefüge die oben genannten Hoch-Quarz-Mischkristalle vorliegen.

Durch Steuerung des OH-Gehaltes und/oder des Wasserstoff-Gehaltes der Ofenatmosphäre kann die Dicke der an Lithium verarmten, meistens überwiegend amorphen (glasigen) Oberflächenzone auf gewünschte Werte eingestellt werden. Dünnere Schichten werden durch hohe OH-Gehalte (1 bis 20 Vol% OH-Gehalt der Ofenatmosphäre) und dickere Schichten durch niedrige OH-Gehalte der Ofenatmosphäre erzielt (0,1 bis 1 Vol%).

Grundsätzlich ist es möglich sowohl OH-enthaltende Verbindungen als auch Wasserstoff einzusetzen, um die gewünschten Li verarmten Schichten zu erreichen. Nach der vorliegenden Erfindung kommt allerdings H₂O zum Einsatz, da der Umgang und die Lagerung von H₂O einfach und umweltfreundlich ist.

Leider hat es sich gezeigt, dass auf der mit einer Trägerplatte (z.B. glatte Platte aus Glaskeramik) während des Keramisierungsvorganges in Kontakt stehenden Rückseite der zu keramisierenden Scheibe sich diese Li-verarmte Oberflächenzone nur in den Randbereichen bis zu einer Entfernung von etwa 100 mm bis 200 mm vom Rand der Scheibe ähnlich dick wie auf der Oberseite ausbildet (bei HQMK Keramisierung im Mittel 300 bis 700 nm), während bei einer größeren Entfernung vom Rand, die Li-verarmte Schicht nur noch eine Dicke von im Mittel 50 nm bis etwa 100 nm besitzt.

Durch diese ungleichmäßige und für einige Anwendungen unzureichende Dicke der an Li-Ionen verarmten Oberflächenzone der LAS Glaskeramik Scheibenrückseite wird z.B. die Haftfestigkeit und Kratzfestigkeit einer aufgebrachten Beschichtung lokal herabgesetzt oder die reflexionsmindernde Wirkung der Li-armen Schicht ist lokal nicht vorhanden, oder die Standzeit einer Trägerplatte für die Solarindustrie ist deutlich herabgesetzt. Besonders störend macht sich der Einfluss auf die Haft- und Kratzfestigkeit bei einer Beschichtung der Rückseite bemerkbar, die beim Einbrand oder im Einsatz Temperaturen von 600°C bis 900°C ausgesetzt wird.

Nach der vorliegenden Erfindung verwendet man während des Keramisierungs-vorganges also Unterlagen, die mit Luft- oder Gaszuführungen versehen sind und auf diese Weise auch die Unterseite der zu keramisierenden Glaskeramik überall mit der auf der Oberseite oder am Rand vorhandenen Ofenatmosphäre verbindet.

Diese überraschend einfache Lösung des Problems ist auf verschiedene Art verwirklichbar. So kann die Luft- oder Gaszuführung dadurch bewirkt werden, dass die Trägerplatte an ihrer mit der zu keramisierenden Scheibe in Kontakt stehenden Seite mit Rillen versehen wird, durch die Luft oder Gas von den Randbereichen der Trägerplatte auch zu den weiter innen auf der Trägerplatte ruhenden Teilen der Scheibe gelangen kann. Damit kann auch unter der Glaskeramikscheibe näherungsweise derselbe Zustand der Ofenatmosphäre erreicht werden wie auf der Oberseite und am Rand der Glaskeramikscheibe.

Um einen guten Luft- oder Gaszutritt zu der Unterseite der Scheibe zu erreichen, werden die Rillen bevorzugt parallel zu der Schmalseite der Trägerplatte und damit auch der Scheibe (= Querrillen) angeordnet, da dadurch die Diffusionswege für die Luft oder das Gas kürzer sind als wenn die Rillen längs der Breitseite der Trägerplatte (= Längsrillen) verlaufen würden. Die Rillen können eine Breite von 0,1mm bis 20 mm besitzen und 0,05 mm bis 2 mm tief sein. Bei zu breiten Rillen können an der Rückseite der Scheibe sichtbare Deformationen durch partielles Einsacken der Scheibe in die Rillen auftreten. Sofern das nicht aus gestalterischen Gründen erwünscht ist, ist die Rillenbreite so schmal zu wählen, dass derartige Deformationen praktisch nicht auftreten. Je nach Keramisierungsprogramm, Keramisierungstemperatur, Zusammensetzung der herzustellenden Glaskeramik und den optischen Anforderungen an die Glaskeramikplatte ist die für den individuellen Keramisierungsprozess optimale Rillenbreite mit Hilfe der unten angegebenen Orientierungswerte durch wenige Vorversuche zu ermitteln. Werden die Rillen zu flach, kann eine optimale Luft- oder Gaszufuhr nicht mehr gewährleistet werden, werden sie zu tief, kann die Festigkeit bzw. die Lebensdauer der Trägerplatte verringert werden. Es hat sich gezeigt, dass gute Ergebnisse erzielt werden, wenn der Querschnitt der Rillen 0,1 bis 2,5 mm² beträgt. Größere Querschnitte bringen keine Verbesserung mit sich, bei kleineren Querschnitten kann die Luftzufuhr zu schwach werden. Als besonders günstig haben sich Rillenbreiten von 1 mm bis 5 mm und Rillentiefen von 0,2 mm bis 0,5 mm erwiesen. Um eine gleichmäßige Dicke der an Li-Ionen-verarmten Oberflächenzone zu erreichen, sollte anhand von Vorversuchen geklärt werden, bis zu welchem seitlichen Abstand von der Rille die gewünschte Dicke der Li-armen Zone auftritt. Die Dicke kann zum Beispiel an einem Querschnitt im Raster-Elektronen-Mikroskop (SEM) bestimmt werden. Anschließend werden die Trägerplatten mit Rillen versehen, die so voneinander beabstandet sind, dass sich die gewünschte Mindestdicke der Li-armen Zone über die gesamte Unterseite der keramisierten Scheibe einstellt. Als Anhaltspunkt kann angegeben werden, dass für eine etwa 300 nm dicke Li-arme Zone die Rillen einen Abstand von 10 mm bis 150 mm, insbesondere von 20 mm bis 100 mm voneinander haben sollten. Vorteilhaft für die Herstellkosten der auf diesen mit Rillen versehenen Trägerplatten zu keramisierenden Glaskeramiken ist, dass diese Rillen sowohl eingefräst (mechanisch oder durch Sandstrahl) als auch während der Heißformgebung der Trägerplatten durch strukturierte Walzen oder Stempel eingeprägt werden können.

Eine weitere Möglichkeit der Luftzufuhr zwischen Trägerplatte und Glas(keramik)scheibe besteht darin, die Oberseite der Trägerplatte mit Noppen zu versehen. In die Zwischenräume zwischen den Noppen kann Luft oder Gas eintreten und die gewünschte Lithium-Verarmung der Unterseite der aufliegenden Glaskeramikscheibe herbeiführen. Zahl und Ausgestaltung der Noppen der Trägerplatte muss so gewählt werden, dass die Glas(keramik)scheibe auf einer möglichst großen Anzahl von Noppen aufliegt, um eine etwaige Deformation zu vermeiden bzw. gering zu halten. Durch die Vielzahl der höhengleichen Noppen ergibt sich auch eine Vielzahl von Luft- oder Gaszufuhrkanälen, so dass die Noppen niedrig sein können. Noppen, die einen Durchmesser von 0,5 mm bis 100 mm, eine Höhe von 0,05 mm bis 2 mm und einen Abstand voneinander von 1 mm bis 120 mm besitzen, sind im allgemeinen gut geeignet. Als Anhaltspunkt für Optimierungsversuche kann angegeben werden, dass eine Trägerplatte, die Noppen mit einem Durchmesser (am Fuß) von 1mm bis 2 mm, einer Höhe von 0,1mm bis 0,5 mm und einem Abstand voneinander von ca. 2 mm besitzt, bei einer 4 mm dicken LAS-Glaskeramik auf der Keramisierungskontaktseite eine etwa 500 nm dicke amorphe Li-arme Schicht hervorruft. Durch besonders spitze Noppen kann erreicht werden, dass sich diese Noppen deutlich in der fertigen Glaskeramikscheibe abbilden, so dass besondere ästhetische Wirkungen erzielt werden können.

Weiterhin kann die Luftzuführung darin bestehen, dass die Oberfläche der Trägerplatte aufgerauht wird. Dieses Aufrauhen kann beispielsweise durch chemisches Ätzen, Sandstrahlen oder Anschleifen erzeugt werden. Um auch bei größeren (z.B. 400 x 400 mm) Scheiben eine Li-arme Schicht von etwa 200 nm zu erzeugen ist eine Rauheit RMS von etwa 10 µm bis 50 µm erforderlich. Größere Rauheiten RMS von 50µm bis 200µm ergeben Li-verarmte Schichten mit einer Dicke von 200 nm bis zu 500 nm. Allgemein sind je nach den gewünschten Schichtdicken Rauheiten der Oberfläche der Auflageplatte von 5 µm bis 100 µm geeignet. Die Rauheit der Oberflächen wurde mit einem Weißlichtinterferometer oder einem Tastschnittgerät bestimmt.

Eine weitere Möglichkeit der Luft- oder Gaszuführung besteht darin, Luft oder Gas durch die Trägerplatte hindurch zuzuführen. Das kann erreicht werden, durch die Verwendung poröser offenporiger Trägerplatten, oder durch Trägerplatten, die auf der Keramisierungskontaktseite eine poröse Schicht besitzen oder durch Trägerplatten, die mit Löchern (z.B. Bohrungen) versehen sind.

Es hat sich gezeigt, dass mit Trägerplatten, bei denen die Löcher einen Abstand von 50 mm bis etwa 150 mm voneinander haben, eine LAS-Glaskeramikscheibe mit einer wenigstens 300 nm dicken amorphen Li-armen Zone erzeugt werden kann. Die Löcher können einen Durchmesser von 3 mm bis 20 mm besitzen. Oberhalb eines Lochdurchmessers von 20 mm besteht die Gefahr, dass die zu keramisierende Glasscheibe während der Keramisierung durchhängt, was normalerweise unerwünscht ist, für bestimmte gestalterische Wirkungen jedoch durchaus erwünscht sein kann. Unterschreitet der Lochdurchmesser 4 mm, so muss der Abstand der Löcher deutlich verkleinert (z.B. 10 mm bis 50 mm), und die Anzahl erhöht werden, wodurch jedoch die Festigkeit der Trägerplatte herabgesetzt wird.

Bevorzugt werden Lochdurchmesser von 5 mm bis 15 mm in einer hexagonalen Anordnung. Die Löcher können in die Trägerplatten nach den üblichen Methoden eingebracht werden, z. B. durch Bohren, Laserschneiden oder während der Herstellung der Trägerplatte durch Lochen im wärmeweichen Zustand.

Damit die Luft durch die Löcher (Perforationen) möglichst effizient an die Glaskeramikscheibe gelangt, kann die Trägerplatte derart gelagert werden, dass der Luftzutritt zu den Löchern auf der Unterseite der Trägerplatte gewährleistet ist. Das kann durch eine hohle Lagerung der Trägerplatte durch Noppen, Leisten und dergleichen auf einer weiteren Trägerplatte mit geschlossener Oberfläche erfolgen

Offenporige Trägerplatten, die eine Porosität von mindestens 2%, vorzugsweise >6% besitzen, sind sehr wirkungsvoll für die Erzeugung einer Li-armen Oberflächenzone und es können bei einem niedrigen OH-Gehalt der Ofenatmosphäre relativ zu dem im Glaskeramik-Inneren Schichtdicken von bis zu 500 nm für die Li-arme Zone erzeugt werden.

Um Beschädigungen der Oberfläche der Glaskeramikscheibe durch Anhaften der Scheibe an der Trägerplatte oder durch Kratzer zu vermeiden, kann zwischen Trägerplatte und Glaskeramikscheibe ein Trennmittel angeordnet werden. Geeignete Trennmittel sind z. B. Schichten oder bekannte Pulver aus Oxiden wie Al₂O₃, SnO₂, TiO₂, BN, SiO₂, ZrO₂, Fe-Oxid, Mg-Oxid, Mg-Silicat oder aus Metallschichten wie Au, Pt, Rh oder Ag. Die Trennschichten können mit Hilfe bekannter Beschichtungsverfahren auf die Trägerplatten gebracht werden, z.B. durch Sputtern, Tauchen, Aufdampfen, Siebdruck, Aufstäuben oder Sprühen. Übliche Schichtdicken liegen zwischen 0,2 µm und 100 µm. Beim Aufbringen von Pulvern können auch dickere Schichten sinnvoll sein.

Die Tabelle zeigt Anwendungsbeispiele für die minimale Dicke der Li-armen Oberflächenzone auf der Unterseite bei glatten 800 mm x 600 mm x 4 mm großen LAS-Glaskeramik Platten, keramisiert in die HQMK-Phase auf Trägerplatten aus Keatit-Glaskeramik mit unterschiedlicher Oberflächenstruktur

**Tabelle 1**

| **Beispiel** | **Struktur der Träger Oberfläche** | **Rauhigkeit der Träger OF Rms (µm)** | **Minimale Dicke der Li-armen Zone [nm]** |
|---|---|---|---|
| 1* | glatt | 0,1 | 50±20 |
| 2 | chemisch geätzt | 1 | 100±30 |
| 3 | sandgestrahlt | 10-30 | 150-200 |
| 4 | Noppen, Ø=1,5 mm, Höhe 150 µm, Abstand 2 mm | 0,2 | 450±50 |
| 5 | Querrillen, Breite=3 mm, Tiefe= 0,5 mm, Abstand=100 mm | 0,1 | 300±30 |
| 6 | Bohrlöcher, Ø 6 mm, Abstand 100 mm | 0,1 | 320±30 |
| 7 | Bohrlöcher, Ø 6 mm, Abstand 200-250 mm | 0,1 | 100 bis 300 |

Das mit * gekennzeichnete Beispiel 1 ist das Referenzbeispiel ohne spezielle Oberflächenkonditionierung der Trägerplatte

Die vorliegende Erfindung wird nachfolgend anhand von Ausführungsbeispielen und unter Bezugnahme auf die beigeschlossenen

Figuren weiter erläutert. In den Figuren bezeichnen gleiche Bezugszeichen gleiche oder entsprechende Elemente. Es zeigen:
Fig. 1: SEM-Querschnitt Aufnahme der hier ca. 320 nm dicken amorphen Li-armen OF-Schicht in der Mitte der Kontakkeramisierungsseite einer glatten LAS Glaskeramik, die auf eine Glaskeramik-Trägerplatte mit Lochstruktur (Durchmesser: 6 mm, Anstand 100 mm) keramisiert wurde. Aufnahme Region der LAS Glaskeramik in ca. 5 cm Entfernung von einem Loch der Trägerplatte. Die SEM Kontraste lassen im Inneren die Konturen der im Mittel 50 nm großen HQMK Kristalle erkennen, die in der 320 nm dicken Schicht fehlen. Dort sind lediglich 5-10 nm große Kontraste zu finden, die auch im Innern vorhanden sind (überwiegend ZrTitanat).
Fig. 2: Time of Flight SIMS Tiefenprofil aus der Oberseite einer unter ähnlichen Bedingungen wie in Fig. 1 keramisierten LAS Glaskeramik. Li ist hier bis in ca. 500 nm Tiefe ggü. dem Inneren verarmt, im Gegenzug sind Elemente wie Na, K und Ba in diesem Bereich angereichert.
Fig. 3:
   Ein schematisch dargestelltes erfindungsgemäßes Temperatur-Zeit-Programm für die Keramisierung;
Fig. 4:
   Sollwertanforderungen an die Transmissionswerte bei spezifizierten Wellenlängen im sichtbaren Spektralbereich sowie die Transmissionswerte einer mit dem erfindungsgemäßen Verfahren hergestellten Glaskeramik;
Fig. 5:
   Transmission und Trübung verschiedener Glaskeramikscheiben als Ergebnis unterschiedlicher Keramisierungsparameter.

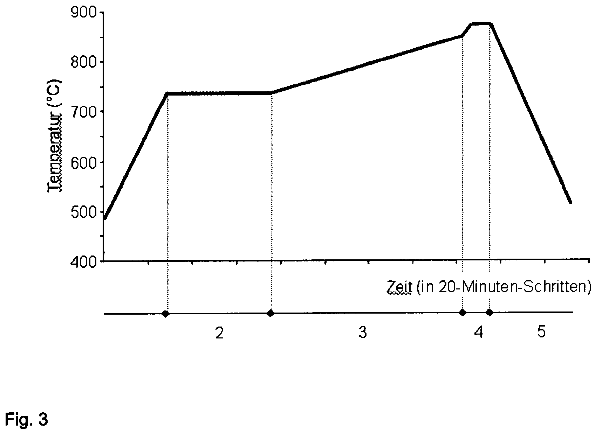

In Figur 3 ist beispielhaft ein erfindungsgemäßes Temperatur-Zeitprogramm für die Keramisierung von Ausgangsgläsern, wie beispielsweise LAS-Ausgangsgläsern zu hochfesten, transparenten Glaskeramiken dargestellt. Der bereitgestellte Ausgangsglas-Artikel durchläuft eine Aufheizphase 1, in der er auf Temperaturen zwischen 700 und 780°C, bevorzugt 720 bis 750°C, in diesem Beispiel 735°C erhitzt wird. In der Keimbildungsphase 2 verbleibt der Artikel vorzugsweise für 30 bis 60, besonders bevorzugt 40 bis 50, hier dargestellt 45 Minuten in diesem Temperaturbereich.

Es schließt sich eine weitere Aufheizphase 3 an, in der der Ausgangsglas-Artikel mit den erzeugten Kristallisationskeimen auf 820 bis 850°C aufgeheizt wird, wobei ein Temperaturgradient oder eine Heizrate von 0,9 bis 2,3 °C/min gefahren wird. Während dieser Aufheizphase findet ein Großteil der Kristallisation statt, insbesondere werden wenigstens 50 Vol-%, besonders bevorzugt mindestens 60 Vol.-%, der Gesamtkristalle des fertigen Glaskeramik-Artikels während dieser Aufheizphase 3 gebildet.

Nachdem ein Großteil der gewünschten Kristalle oder Kristallite gebildet wurde, schließt sich die Maximaltemperatur-Phase 4 an, in der der zumindest teilweise kristallisierte Artikel in einem Zeitraum, der 5 bis 15 Minuten, bevorzugt 8 bis 12 Minuten und hier dargestellt 10 Minuten umfasst, zum einen auf eine Temperatur im Bereich zwischen 800 und 900°C, besonders bevorzugt zwischen 865 und 875°C, hier dargestellt 870°C erhitzt wird und zum anderen einige Zeit in diesem Temperaturbereich verbleibt. Die Maximaltemperatur-Phase 4 dient der Vermeidung beziehungsweise dem Abbau von Restspannungen in dem kristallisierten Artikel.

Anschließend wird der keramisierte Artikel mit mindestens 5°C/Minute und maximal 20°C/Minute, hier dargestellt 14°C/Minute abgekühlt (Abkühlphase 5). In dieser Abkühlungsphase wird der Glaskeramik-Artikel auf Temperaturen von wenigstens 600 °C, bevorzugt aber auf noch niedrigere Temperaturen, abgekühlt. Im Gegensatz zu dem hier dargestellten Verfahren ist es auch möglich, dass die Abkühlphase 5 nur zeitweise sehr schnell verläuft, beispielsweise zu Beginn der Abkühlung, während später eine niedrigere Kühlrate gefahren wird.

Durch dieses Verfahren wird bei Verwendung von LAS-Ausgangsgläsern eine hochtransparente Glaskeramik geschaffen, die in ihren Eigenschaften auch den Einsatz als Sichtscheibe, etwa für Fahrzeuge ermöglicht.

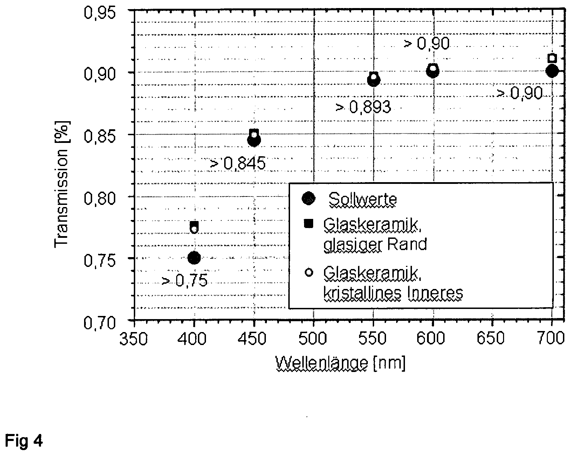

Figur 4 zeigt die Sollwertanforderungen an die Transmissionswerte (große grau-gefüllte Kreise) bei Bestrahlung mit einem Normlicht CIE standard illuminant D65 im sichtbaren Spektrum sowie die erreichten Transmissionswerte einer erfindungsgemäß hergestellten Glaskeramik-Scheibe von 5 mm Dicke, wobei die eingetragenen Werte auf eine Dicke von 4 mm normiert wurden. Die kleinen grauen Kreise zeigen die Transmissionswerte des kristallinen Inneren, die schwarzen Quadrate zeigen die Transmissionswerte im Randbereich der Glaskeramik-Scheibe. Im gesamten sichtbaren Spektrum, sowohl im zentralen Bereich als auch im Randbereich der erfindungsgemäßen Glaskeramik-Scheibe sind die Anforderungen an die Transmissionswerte erfüllt, d.h. sie liegen oberhalb von 0,75, ab 600 nm Wellenlänge sogar oberhalb von 0,90.

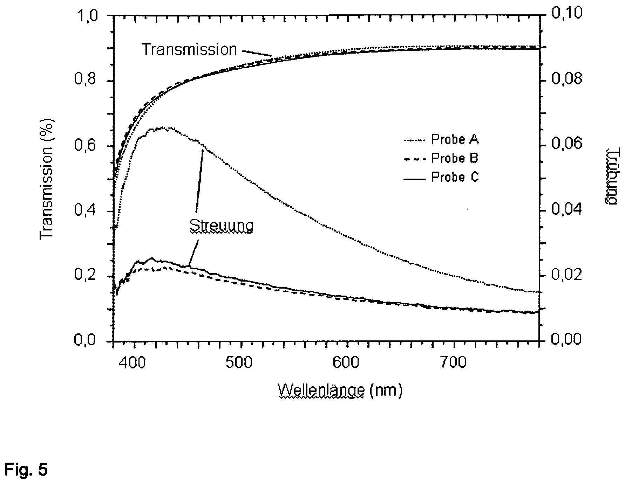

Figur 5 zeigt die Transmission und die Trübung, auf 4 mm Scheibendicke normiert, von drei Glaskeramik-Scheiben, deren Herstellungsprozess jeweils leicht variiert wurde. Auffällig ist, dass der Kurvenverlauf der Transmission bei allen drei Scheiben sehr ähnlich bis fast identisch ist.

Im Gegensatz dazu zeigt die Streuung der mit Probe A bezeichneten Glaskeramik-Scheibe deutlich höhere Werte, insbesondere im Bereich zwischen 400 und 460 nm Wellenlänge, als die mit Probe B und C bezeichneten Scheiben. Alle drei Proben wurden mit dem erfindungsgemäßen Verfahren hergestellt, mit Ausnahme von Probe A, die während der Maximaltemperatur-Phase 4 nur einer Temperatur von 820°C ausgesetzt wurde. Die Proben B und C wurden dagegen mit der erfindungsgemäßen Temperatur von 870°C in der Maximaltemperatur-Phase 4 behandelt. Der Unterschied bezüglich der Trübung zwischen den Proben ist auffällig und belegt die Wichtigkeit einer sehr genau gesteuerten Temperaturführung besonders in dieser Phase des Verfahrens.

Messungen der Gitterkonstanten der Proben ergaben Unterschiede in der Gitterkonstante a, die für die Proben B und C, die eine geringe Trübung aufweisen bei 5,18328 Å bzw. bei 5,18406 Å lagen, während die Probe A neben einer höheren Trübung auch eine höhere Gitterkonstante a von 5,1906 Å aufweist. Auch die Gitterkonstante c ist mit 5,4410 bei den Proben B und C geringer als bei der Probe A, die eine Gitterkonstante c von 5,4412 aufweist. Darüber hinaus ist auch das Volumen der Elementarzellen der Probe A mit 1269,572 Å3 größer als das Volumen der Proben B mit 1265,958 Å3 und C mit 1266,328 Å3. Besonders vorteilhaft in Bezug auf eine geringe Streuung des fertigen Glaskeramik-Artikels weisen somit die Hochquarz-Mischkristalle im kristallinen Innenbereich eine Gitterkonstante a im Bereich zwischen 5,18 und 5,19 Å auf.

Das Herstellungsverfahren der Proben B und C unterscheidet sich voneinander nur hinsichtlich der etwas unterschiedlichen Keimbildungstemperaturen während der Keimbildungsphase 2. Die resultierenden unterschiedlichen Trübungswerte besonders im Bereich von 400 bis 500 nm Wellenlänge belegen, dass auch die Temperaturführung während der Keimbildungsphase 3 Einfluss auf die optische Qualität der erzeugten Glaskeramik-Scheibe hat. Allerdings ist festzustellen, dass die Temperaturführung während dieser Verfahrensphase weniger kritisch ist als während der nachfolgenden Maximaltemperatur-Phase 4.

## Patentansprüche

1. Lithiumhaltige, transparente, allseitig glatte Glaskeramik, die einen Zusammensetzungsbereich in Massen-% von
| | |
|---|---|
| 50 - 75,0 | SiO₂, |
| 15 - 28,0 | Al₂O₃, |
| 0 - 2,0 | B₂O₃, |
| 0 - 1,0 | F, |
| 2,0 - 6,0 | Li₂O, |
| 0 - 6,5 | CaO + SrO + BaO, |
| 0 - 7,0 | TiO₂, |
| 0 - 5,0 | ZrO₂, |
| 0 - 4,0 | ZnO, |
| 0 - 3,0 | Sb₂O₃, |
| 0 - 3,0 | MgO, |
| 0 - 3,0 | SnO₂, |
| 2,0 - 7,0 | TiO₂ + ZrO₂ + SnO₂ |
| 0 - 8,0 | P₂O₅, |
| 0 - 1,5 | As₂O₃, |
| 0 - 1,0 | Nd₂O₃ |
| 0 - 4,0 | Na₂O + K₂O, wobei die jeweiligen Anteile innerhalb der nachfolgend angegebenen Bereiche liegen, |
| 0 - 4,0 | Na₂O, |
| 0 - 4,0 | K₂O, |
sowie üblichen Läutermittel wie Sb₂O₃, As₂O₃, SnO₂, Ce₂O₃, Fluor, Brom und Sulfat, bei einem Wassergehalt von 0,01 - 0,08 Massen-% umfasst, mit geringer Wärmeausdehnung, einer auf allen Seiten 50 nm bis 3000 nm dicken amorphen, an Lithium verarmten überwiegend glasigen Oberflächenzone, die einen kristallinen Innenbereich umschließt, mit dem sie durch einen Übergangsbereich verbunden ist, und einer Transmission bezogen auf eine Wandstärke von 4 mm im sichtbaren Wellenlängenbereich größer als 0,75 bei 400 nm, größer als 0,845 bei 450 nm, größer als 0,893 bei 550 nm, größer als 0,90 bei 600 nm und größer als 0,90 bei 700 nm Wellenlänge.

2. Glaskeramik nach Anspruch 1,
**dadurch gekennzeichnet,**
**dass** die glasige Oberflächenzone eine Dicke im Bereich von wenigstens 250 nm und besonders bevorzugt von 300 bis 1500 aufweist und mit dem kristallinen Innenbereich durch einen Übergangsbereich verbunden ist, der maximal 200 nm, bevorzugt 100 nm dick ist.

3. Glaskeramik nach Anspruch 1 oder 2,
**dadurch gekennzeichnet,**
**dass** die Hauptkristall-Phase in der Glaskeramik mehr als 50 Gew.-% Hochquarz-Mischkristalle enthält und dass die Hochquarz-Mischkristalle des kristallinen Innenbereichs der Glaskeramik eine Gitterkonstante a im Bereich von 5,18 Å bis 5,19 Å aufweisen.

4. Glaskeramik nach wenigstens einem der Ansprüche 1 bis 3,
**dadurch gekennzeichnet,**
**dass** die glasige Oberflächenzone maximal 10 Gew.-% Kristalle, bevorzugt weniger als 1 Gew.-% Kristalle und der kristalline Innenbereich mindestens 50 Gew.-% Kristalle, bevorzugt mindestens 80 Gew.-% und besonders bevorzugt mindestens 90 Gew.-% Kristalle umfasst.

5. Glaskeramik nach wenigstens einem der Ansprüche 1 bis 4,
**dadurch gekennzeichnet,**
**dass** ein Brechungsindex-Unterschied zwischen der Glasphase und den Kristallen in einem Bereich zwischen 0,001 und 0,05 besteht.

6. Glaskeramik nach wenigstens einem der Ansprüche 1 bis 5,
**dadurch gekennzeichnet,**
**dass** die glasige Oberflächenzone einen geringeren Brechungsindex als der überwiegend kristalline Innenbereich der Glaskeramik aufweist.

7. Glaskeramik nach wenigstens einem der Ansprüche 1 bis 6,
**dadurch gekennzeichnet,**
**dass** die Kristalle Korngrößen aufweisen, deren Standardabweichung kleiner als +/- 5 %, bevorzugt kleiner als +/- 3 % und insbesondere bevorzugt kleiner +/- 2 % ist.

8. Verfahren zur Herstellung einer Glaskeramik nach den Ansprüchen 1 bis 7, wobei das Ausgangsglas mit den Keimbildnern bereitgestellt und das Ausgangsglas einer Temperaturbehandlung unterzogen wird,
**dadurch gekennzeichnet,**
- **dass** das Ausgangsglas zunächst auf eine Keimbildungstemperatur im Bereich von 700 bis 810°C erhitzt wird und die Verweilzeit in diesem Temperaturbereich zwischen 3 und 120 Minuten beträgt, anschließend
- das Ausgangsglas mit den gebildeten Keimen von der Keimbildungstemperatur auf 810 bis 880°C aufgeheizt wird, wobei die Heizrate von 0,1 bis 5,0 K/min beträgt und anschließend
- das zumindest teilweise keramisierte Ausgangsglas auf Temperaturen im Bereich zwischen 880 und 970°C erhitzt wird, wobei das zumindest teilweise kristallisierte Ausgangsglas nach dem Erhitzen für mehrere Minuten in diesem Temperaturbereich gehalten wird und die Dauer dieses Prozess-Schritts zwischen 1 und 45 Minuten beträgt und
- abschließend eine Abkühlung der Glaskeramik zumindest auf unter 600°C durchgeführt wird, wobei die Kühlrate mindestens 5K/Minute beträgt, und wobei
- die Keramisierung bei einem Ofenluft-Feuchtegehalt von maximal 10 Vol.-% Feuchte durchgeführt und bei
- der Keramisierung eine Trägerplatte verwendet wird, die an ihrer mit dem Ausgangsglas/der Glaskeramik in Kontakt stehenden Seite (Kontaktseite) mit Zu- bzw. Ableitungen für die Umgebungsgase (z.B. Ofenatmosphäre) versehen ist.

9. Verfahren nach Anspruch 8,
**dadurch gekennzeichnet,**
**dass** der Temperaturunterschied zwischen Ober- und Unterseite des zu keramisierenden Ausgangsglases während der Keimbildung und der Keramisierung bei < 3K und besonders bevorzugt < 1K gehalten wird.

10. Verfahren nach Anspruch 8 oder 9,
**dadurch gekennzeichnet,**
**dass** die Keramisierung bei einem Ofenluft-Feuchtegehalt von maximal 5 Vol.-% und insbesondere bevorzugt bei maximal 2,5 Vol.-% Feuchte durchgeführt wird.

11. Verfahren nach wenigstens einem der Ansprüche 8 bis 10,
**dadurch gekennzeichnet,**
**dass** ein elektrisch beheizter Ofen, vorzugsweise in Form eines Durchlaufofens, insbesondere eines Rollenofens für die Keramisierung verwendet wird.

12. Verfahren nach Anspruch 8,
**dadurch gekennzeichnet,**
**dass** eine an der Kontaktseite aufgeraute Trägerplatte mit einer Rauheit von 5 µm bis 200 µm, bevorzugt 10 µm bis 50 µm Rms verwendet wird.

13. Verfahren nach Anspruch 8,
**dadurch gekennzeichnet,**
**dass** eine an ihrer Kontaktseite mit Noppen versehene Trägerplatte verwendet wird und dass die Noppen einen Durchmesser von 0,5 mm bis 100 mm, bevorzugt
1 mm bis 2 mm, eine Höhe von 0,05 mm bis 2 mm, bevorzugt 01, mm bis 0,5 mm und einen Abstand der Mittelpunkte voneinander von 1 mm bis 100 mm, bevorzugt 2 mm bis 10 mm besitzen.

14. Verfahren nach Anspruch 8,
**dadurch gekennzeichnet,**
**dass** eine auf der Kontaktseite mit Rillen versehene Trägerplatte verwendet wird und dass die Rillen eine Breite von 0,1 mm bis 20 mm, bevorzugt 1 mm bis 5 mm, eine Tiefe von 0,05 mm bis 2 mm, bevorzugt 0,2 mm bis 0,5 mm und einen Abstand voneinander von 1 cm bis 15 cm, bevorzugt 2 cm bis 10 cm besitzen.

15. Verfahren nach Anspruch 8,
**dadurch gekennzeichnet,**
**dass** eine mit Durchgangslöchern versehene oder aus porösen Materialien hergestellte Trägerplatte verwendet wird und dass die Durchgangslöcher einen Durchmesser von 3 mm bis 20 mm, bevorzugt 5 mm bis 15 mm und einen Abstand der Mittelpunkte voneinander von 1 cm bis 20 cm, bevorzugt 5 cm bis 15 cm besitzen.

16. Verfahren nach wenigstens einem der Ansprüche 8 bis 15,
**dadurch gekennzeichnet,**
**dass** die Trägerplatte eine Trennschicht aus Al₂O₃, SnO₂, TiO₂, TiAln, SiN, BN, SiO₂, ZrO₂, FeOxid, MgO, Mg-Silicat, Calcium-Carbonat, Au, Pt, Rh oder Kombinationen daraus besitzt.

17. Verwendung einer Glaskeramik mit einer ebenen, flächigen, platten-, scheibenförmigen beidseitig glatten Geometrie nach den Ansprüchen 1 bis 7, hergestellt nach dem Verfahren gemäß den Ansprüchen 8 bis 16 auf einer Trägerplatte, zur Herstellung von Fahrzeugsichtscheiben, beschusshemmenden Sichtscheiben (Schichtverbunden), Kochflächen, Ofen- und Kaminsichtscheiben, als glaskeramischer Gegenstand für Hoch- oder extreme Niedrigtemperaturanwendungen, als Ofenfenster für Verbrennungsöfen, als Weißware, als Scheiben für Backofentüren, als Trägerplatte für Edelmetall-Beschichtungen und damit als Kochfläche für Induktion oder Gasbeheizung, als Trägerplatte für Vakuumbeschichtungsprozesse, insbesondere für solare Funktionsschichten, als transparente Backofenscheiben, Brandschutzscheiben, Mikrowelleneinlegeböden, sowie als Trägerplatten in der Display- und in der Solarindustrie und bei anderen Anwendungen mit insbesondere wechselnder Temperaturbelastung.

## Claims

1. Lithium-containing, transparent glass ceramic smooth on all sides and having a composition range in wt.-% as follows:
| | |
|---|---|
| 50 - 75.0 | SiO₂, |
| 15 - 28.0 | Al₂O₃, |
| 0 - 2.0 | B₂O₃, |
| 0 - 1.0 | F, |
| 2.0 - 6.0 | Li₂O, |
| 0 - 6.5 | CaO + SrO + BaO, |
| 0 - 7.0 | TiO₂, |
| 0 - 5.0 | ZrO₂, |
| 0 - 4.0 | ZnO, |
| 0 - 3.0 | Sb₂O₃, |
| 0 - 3.0 | MgO, |
| 0 - 3.0 | SnO₂, |
| 2.0 - 7.0 | TiO₂ + ZrO₂ + SnO₂ |
| 0 - 8.0 | P₂O₅, |
| 0 - 1.5 | As₂O₃, |
| 0 - 1.0 | Nd₂O₃ |
| 0 - 4.0 | Na₂O + K₂O, wherein the respective proportions lie within the ranges given below, |
| 0 - 4.0 | Na₂O, |
| 0 - 4.0 | K₂O, |
as well as conventional refining agents such as Sb₂O₃, As₂O₃, SnO₂, Ce₂O₃, fluorine, bromine and sulfate, with a water content of 0.01-0.08 wt.-%, with low thermal expansion, an amorphous, lithium-depleted, predominantly glassy surface zone which is 50 nm to 3,000 nm thick on all sides and encloses a crystalline inner region with which it is connected through a transition region, and with a transmission based on a wall thickness of 4 mm in the visible wavelength range greater than 0.75 at 400 nm, greater than 0.845 at 450 nm, greater than 0.893 at 550 nm, greater than 0.90 at 600 nm, and greater than 0.90 at 700 nm wavelength.

2. The glass ceramic according to claim 1,
**characterized in that**
the glassy surface zone has a thickness in the range of at least 250 nm and more preferably 300 to 1,500, and is connected to the crystalline inner region by a transition region which is at most 200 nm, preferably 100 nm thick.

3. The glass ceramic according to claim 1 or 2,
**characterized in that**
the main crystal phase in the glass ceramic contains more than 50 wt.-% of high-quartz mixed crystals, and that the high-quartz mixed crystals of the crystalline inner region of the glass ceramic have a lattice constant a in the range from 5.18 Å to 5.19 Å.

4. The glass ceramic according to at least one of claims 1 to 3,
**characterized in that**
the glassy surface zone comprises a maximum of 10 wt.-% of crystals, preferably less than 1 wt.-% of crystals, and the crystalline inner region comprises at least 50 wt.-% of crystals, preferably at least 80 wt.-% and more preferably at least 90 wt.-% of crystals.

5. The glass ceramic according to at least one of claims 1 to 4,
**characterized in that**
a refractive index difference between the glass phase and the crystals lies in a range between 0.001 and 0.05.

6. The glass ceramic according to at least one of claims 1 to 5,
**characterized in that**
the glassy surface zone has a lower refractive index than the predominantly crystalline inner region of the glass ceramic.

7. The glass ceramic according to at least one of claims 1 to 6,
**characterized in that**
the crystals have grain sizes for which the standard deviation is less than ±5%, preferably less than ±3% and more preferably less than ±2%.

8. A method for producing a glass ceramic according to claims 1 to 7, wherein the starting glass with the nucleating agents is provided and the starting glass is subject to a temperature treatment,
**characterized in that**
- the starting glass is first heated to a nucleation temperature in the range from 700 to 810 °C and the dwelling time in this temperature range is between 3 and 120 minutes, then
- the starting glass with the formed nuclei is heated from the nucleation temperature to 810 to 880 °C, wherein the heating rate is from 0.1 to 5.0 K/min, and then
- the at least partially ceramized starting glass is heated to temperatures in the range between 880 and 970 °C, wherein, after the heating, the at least partially crystallized starting glass is kept in this temperature range for several minutes and the duration of this method step lasts between 1 and 45 minutes, and
- finally, cooling of the glass ceramic is carried out at least to below 600 °C, wherein the cooling rate is at least 5 K/min; and wherein
- the ceramization is carried out at an oven air moisture content of a maximum of 10% by volume of moisture, and wherein
- a carrier plate is used for the ceramization and is provided with inlet and outlet lines for the surrounding gases (e.g. oven atmosphere) at its side (contact side) which is in contact with the starting glass/the glass ceramic.

9. The method according to claim 8,
**characterized in that**
the temperature difference between the upper and lower side of the starting glass to be ceramized is maintained at < 3 K and particularly preferably at < 1 K during nucleation and ceramization.

10. The method according to claim 8 or 9,
**characterized in that**
the ceramization is carried out at an oven air moisture content of a maximum of 5% by volume and more preferably at a maximum of 2.5% by volume of moisture.

11. The method according to one of claims 8 to 10,
**characterized in that**
an electrically heated kiln, preferably in the form of a continuous kiln, in particular a roller kiln, is used for the ceramization.

12. The method according to claim 8,
**characterized in that**
a carrier plate roughened on the contact side with a roughness of 5 µm to 200 µm, preferably 10 µm to 50 µm Rms, is used.

13. The method according to claim 8,
**characterized in that**
a carrier plate provided with nubs on its contact side is used, wherein the nubs have a diameter of 0.5 mm to 100 mm, preferably 1 mm to 2 mm, a height of 0.05 mm to 2 mm, preferably from 0.1 mm to 0.5 mm, and a distance of the center-points from one another of 1 mm to 100 mm, preferably 2 mm to 10 mm.

14. The method according to claim 8,
**characterized in that**
a carrier plate provided with grooves on the contact side is used, wherein the grooves have a width of 0.1 mm to 20 mm, preferably 1 mm to 5 mm, a depth of 0.05 mm to 2 mm, preferably 0.2 mm to 0.5 mm, and a distance from one another of 1 cm to 15 cm, preferably 2 cm to 10 cm.

15. The method according to claim 8,
**characterized in that**
a carrier plate provided with through-holes or made of porous materials is used, wherein the through-holes have a diameter of 3 mm to 20 mm, preferably 5 mm to 15 mm, and a distance of the center-points from one another of 1 cm to 20 cm, preferably 5 cm to 15 cm.

16. The method according to one of claims 8 to 15,
**characterized in that**
the carrier plate has a separation layer made of Al₂O₃, SnO₂, TiO₂, TiAln, SiN, BN, SiO₂, ZrO₂, Fe-oxide, MgO, Mg-silicate, calcium carbonate, Au, Pt, Rh or combinations thereof.

17. The use of a glass ceramic with a planar, sheetlike, plate-shaped, panel-shaped geometry that is smooth on both sides according to claims 1 to 7, produced according to the method according to claims 8 to 16 on a carrier plate, for the production of vehicle windshields, bullet-proof windshields (multilayer composite), cooking surfaces, oven and fireplace viewing panels, as glass-ceramic object for high or extreme low-temperature applications, as oven windows for incinerators, as white goods, as panels for baking oven doors, as carrier plates for noble metal coatings, and hence as a cooking surface for induction or gas heating, as carrier plate for vacuum coating processes, in particular for solar functional layers, as transparent baking oven panels, fire protection panels, microwave base plates, as well as carrier plates in the display industry and in the solar industry and in other applications, in particular with varying temperature loads.

## Revendications

1. Vitrocéramique lisse sur toutes les faces, transparente, contenant du lithium, qui présente une plage de compositions, en % en masse, de
| | |
|---|---|
| 50-75,0 | SiO₂, |
| 15-28,0 | Al₂O₃, |
| 0-2,0 | B₂O₃, |
| 0-1,0 | F, |
| 2,0-6,0 | Li₂O, |
| 0-6,5 | CaO + SrO + BaO, |
| 0-7,0 | TiO₂, |
| 0-5,0 | ZrO₂, |
| 0-4,0 | ZnO, |
| 0-3,0 | Sb₂O₃, |
| 0-3,0 | MgO, |
| 0-3,0 | SnO₂, |
| 2,0-7,0 | TiO₂ + ZrO₂ + SnO₂, |
| 0-8,0 | P₂O₅, |
| 0-1,5 | As₂O₃, |
| 0-1,0 | Nd₂O₃, |
| 0-4,0 | Na₂O + K₂O, les proportions de chacun entrant dans les plages indiquées ci-après, |
| 0-4,0 | Na₂O, |
| 0-4,0 | K₂O, |
ainsi que des agents d'affinage usuels tels que Sb₂O₃, As₂O₃, SnO₂, Ce₂O₃, le fluor, le brome et un sulfate, pour une teneur en eau de 0,01-0,08 % en masse,
présentant une faible dilatation thermique, une zone superficielle essentiellement vitreuse, appauvrie en lithium, amorphe, ayant sur toutes ses faces une épaisseur de 50 nm à 3000 nm, zone qui comprend un domaine intérieur cristallin, auquel elle est liée par l'intermédiaire d'un domaine de transition, et un facteur de transmission, rapporté à l'épaisseur de paroi de 4 mm dans la gamme des longueurs d'ondes visibles, supérieur à 0,75 à 400 nm, supérieur à 0,845 à 450 nm, supérieur à 0,893 à 550 nm, supérieur à 0,90 à 600 nm et supérieur à 0,90 pour une longueur d'onde de 700 nm.

2. Vitrocéramique selon la revendication 1, **caractérisée en ce que** la zone superficielle vitreuse présente une épaisseur dans la plage d'au moins 250 nm et d'une manière particulièrement préférée de 300 à 1500, et est liée au domaine intérieur cristallin par un domaine de transition, qui a une épaisseur au maximum de 200 nm, de préférence de 100 nm.

3. Vitrocéramique selon la revendication 1 ou 2, **caractérisée en ce que** la phase cristalline principale de la vitrocéramique contient plus de 50 % en poids de solutions solides à haute teneur en quartz et que les solutions solides à haute teneur en quartz du domaine intérieur cristallin de la vitrocéramique présentent une constante de réseau a compris dans la plage de 5,18 Â à 5,19 Â.

4. Vitrocéramique selon au moins l'une des revendications 1 à 3, **caractérisée en ce que** la zone superficielle vitreuse comprend au maximum 10 % en poids de cristaux, de préférence moins de 1 % en poids de cristaux, et que le domaine intérieur cristallin comprend au moins 50 % en poids de cristaux, de préférence au moins 80 % en poids et d'une manière particulièrement préférée au moins 90 % en poids de cristaux.

5. Vitrocéramique selon au moins l'une des revendications 1 à 4, **caractérisée en ce qu'**une différence d'indices de réfraction entre la phase vitreuse et les cristaux est comprise dans une plage de 0,001 à 0,05.

6. Vitrocéramique selon au moins l'une des revendications 1 à 5, **caractérisée en ce que** la zone superficielle vitreuse présente un indice de réfraction inférieur à celui du domaine intérieur essentiellement cristallin de la vitrocéramique.

7. Vitrocéramique selon au moins l'une des revendications 1 à 6, **caractérisée en ce que** les cristaux présentent une granulométrie dont l'écart-type est inférieur à ± 5 %, de préférence inférieur à ± 3 % et d'une manière particulièrement préférée inférieur à ± 2 %.

8. Procédé de fabrication d'une vitrocéramique selon les revendications 1 à 7, dans lequel le verre de départ est mis à disposition avec des agents de nucléation, et le verre de départ est soumis à un traitement thermique, **caractérisé**
- **en ce que** le verre de départ est d'abord chauffé à une température de nucléation comprise dans la plage de 700 à 810°C, et que le temps de séjour dans cette plage de températures est compris entre 3 et 120 minutes, puis
- que le verre de départ, avec les germes formés, est chauffé à partir de la température de nucléation de 810 à 880°C, la vitesse de montée en température étant de 0,1 à 5,0 K/min, puis
- que le verre de départ au moins partiellement céramisé est chauffé à des températures comprises dans la plage de 880 à 970°C, le verre de départ au moins partiellement cristallisé étant, après le chauffage, maintenu pendant plusieurs minutes dans cette plage de températures, et la durée de cette étape du procédé étant comprise entre 1 et 45 minutes, et
- que, pour terminer, on procède à un refroidissement de la vitrocéramique au moins à une température inférieure à 600°C, la vitesse de refroidissement étant d'au moins 5 K/minute, et
- la céramisation étant mise en oeuvre pour une teneur en humidité de l'air du four au maximum de 10 % en volume d'humidité, et
- lors de la céramisation, on utilise une plaque-support, qui sur sa face en contact avec le verre de départ/la vitrocéramique (face de contact) est pourvue d'amenées ou d'évacuations pour les gaz ambiants (p.ex. l'atmosphère du four).

9. Procédé selon la revendication 8, **caractérisé en ce que** la différence de température entre la face supérieure et la face inférieure du verre de départ à céramiser est, pendant la nucléation et la céramisation, maintenue à < 3K et d'une manière particulièrement préférée à < 1K.

10. Procédé selon la revendication 8 ou 9, **caractérisé en ce que** la céramisation est mise en oeuvre en présence d'une teneur en humidité de l'air du four au maximum de 5 % en volume et d'une manière particulièrement préférée au maximum de 2,5 % en volume d'humidité.

11. Procédé selon au moins l'une des revendications 8 à 10, **caractérisé en ce qu'**on utilise pour la céramisation un four électriquement chauffé, de préférence sous forme d'un four à passage continu, en particulier un four à rouleaux.

12. Procédé selon la revendication 8, **caractérisé en ce qu'**on utilise une plaque-support rendue rugueuse sur la face de contact, présentant une rugosité de 5 µm à 200 µm, de préférence de 10 µm à 50 µm Rms.

13. Procédé selon la revendication 8, **caractérisé en ce qu'**on utilise une plaque-support pourvue de protubérances sur sa face de contact, et que les protubérances ont un diamètre de 0,5 mm à 100 mm, de préférence de 1 mm à 2 mm, une hauteur de 0,05 mm à 2 mm, de préférence de 0,1 mm à 0,5 mm, et une distance entre centres de 1 mm à 100 mm, de préférence de 2 mm à 10 mm.

14. Procédé selon la revendication 8, **caractérisé en ce qu'**on utilise une plaque-support pourvue de rainures sur sa face de contact, et que les rainures ont une largeur de 0,1 mm à 20 mm, de préférence de 1 mm à 5 mm, une profondeur de 0,05 mm à 2 mm, de préférence de 0,2 mm à 0,5 mm, et une distance réciproque de 1 cm à 15 cm, de préférence de 2 cm à 10 cm.

15. Procédé selon la revendication 8, **caractérisé en ce qu'**on utilise une plaque-support pourvue de trous traversants, ou fabriquée en des matériaux poreux, et que les trous traversants présentent un diamètre de 3 mm à 20 mm, de préférence de 5 mm à 15 mm, et une distance entre centres de 1 cm à 20 cm, de préférence de 5 cm à 15 cm.

16. Procédé selon au moins l'une des revendications 8 à 15, **caractérisé en ce que** la plaque-support possède une couche de séparation en Al₂O₃, SnO₂, TiO₂, TiAln, SiN, BN, SiO₂, ZrO₂, oxyde de fer, MgO, silicate de Mg, carbonate de calcium, Au, Pt, Rh ou des combinaisons de ceux-ci.

17. Utilisation d'une vitrocéramique ayant une géométrie plane, bidimensionnelle, en forme de plaque, en forme de vitre, lisse des deux côtés, selon les revendications 1 à 7, fabriquée par le procédé selon les revendications 8 à 16 sur une plaque-support, pour la fabrication de voyants pour véhicules automobiles, de voyants pare-balles (composites stratifiés), de surfaces de cuisson, de voyants pour fours et conduits de cheminée, en tant qu'objets en vitrocéramique pour des utilisations à haute température ou à des températures extrêmement basses, en tant que fenêtres de four pour des fours d'incinération, en tant que produits blancs, en tant que vitres pour portes de fours de cuisson, en tant que plaques-supports pour des revêtements de métaux précieux et donc en tant que surfaces de cuisson par induction ou chauffage au gaz, en tant que plaques-supports pour des procédés de revêtement sous vide, en particulier pour des couches fonctionnelles solaires, en tant que vitres transparentes pour fours de cuisson, vitres de protection contre l'incendie, tablettes pour micro-ondes, ainsi qu'en tant que plaques-supports dans l'industrie des présentoirs et dans l'industrie solaire, et dans d'autres applications subissant une contrainte de température en particulier alternée.
